Europäisches Patentamt

European Patent Office

Office européen des brevets

Veröffentlichungsnummer: **0 384 459**
**A1**

# EUROPÄISCHE PATENTANMELDUNG

Anmeldenummer: 90103448.8

Int. Cl.⁵ **B60B 7/08, B60B 7/02**

Anmeldetag: 22.02.90

Priorität: 22.02.89 DE 8902099 U

Veröffentlichungstag der Anmeldung:
29.08.90 Patentblatt 90/35

Benannte Vertragsstaaten:
**AT BE CH DE DK ES FR GB GR IT LI LU NL SE**

Anmelder: **DEVALIT van Deest GmbH & Co.
KG
Schwelmer Strasse 156
D-5600 Wuppertal 22(DE)**

Erfinder: **Sommer, Wilfried
Heidkoppelweg 17
D-2087 Ellerbek(DE)**
Erfinder: **Matthei, Ernst August
Schubertstrasse 9
D-5600 Wuppertal 2(DE)**

Vertreter: **Rieder, Hans-Joachim, Dr. et al
Corneliusstrasse 45
D-5600 Wuppertal 11(DE)**

## Kunststoff-Radkappe.

Die Erfindung betrifft eine in Spritztechnik hergestellte Kunststoff-Radkappe mit einer Scheibe (1) zur Abdeckung der Felgenmulde einer Autofelge oder dergleichen, und mit einer zentral auf der Rückseite (2) der Scheibe (1) angeordneten, radial ausfederbare Rastvorsprünge (6) aufweisenden Befestigungsvorrichtung (3) und schlägt sowohl zur baulichen Vereinfachung als auch zur optischen Verbesserung vor, daß die Rastvorsprünge (6) von der einen Stirnseite einer angespritzten Ringwand (7) ausgehen, deren andere Stirnseite über eine zur Ringwand (7) (rotationssymmetrisches Wandelement) querschnittsreduzierte Materialbrücke (8) in der Scheibe (1) wurzelt.

**FIG. 1**

EP 0 384 459 A1

## Kunststoff-Radkappe

Die Erfindung bezieht sich auf eine in Spritztechnik hergestellte Kunststoff-Radkappe mit einer Scheibe zur Abdeckung der Felgenmulde einer Autofelge oder dergleichen, und mit einer zentral auf der Rückseite der Scheibe angeordneten, radial ausfederbare Rastvorsprünge aufweisenden Befestigungsvorrichtung.

Bei einer bekannten Kunststoff-Radkappe dieser Art sind die einzelnen Rastvorsprünge der Befestigungsvorrichtung freistehend der Rückseite der Scheibe angeformt. Zur Erhöhung der Federwirkung stützen sich die Köpfe der Rastvorsprünge an einer gemeinsamen, offenen Ringfeder ab. Letztere sitzt in einem Käfig, gebildet aus einer angeformten Ringwand, welche oberseitig in den Ring fassende Halteklauen übergeht. Die Verwendung und Zuordnung eines solchen Federringes erhöht den Fertigungsaufwand und bringt bei versehentlich fehlender Zuordnung vermehrt die Gefahr eines Ablösens der Radkappe im Fahrbetrieb. Hinzu kommt noch ein optisch visuelles Problem insofern, als den Ring abstützende, auf der Rückseite der Scheibe angeformte Radialstege zu größeren örtlichen Materialanhäufungen führen, welche sichtseitig der Scheibe entsprechend radialverlaufende Schrumpfungsmarken zeigen.

Aufgabe der Erfindung ist es, eine gattungsgemäße Kunststoff-Radkappe baulich zu vereinfachen sowie auch optisch zu verbessern.

Gelöst ist diese Aufgabe durch die im Anspruch 1 angegebene Erfindung.

Die Unteransprüche sind vorteilhafte Weiterbildungen der erfindungsgemäßen Kunststoff-Radkappe.

Zufolge solcher Ausgestaltung ist vor allem ein vereinfachter Aufbau erzielt. Zusatzteile, wie beispielsweise die erläuterte Feder, können entfallen. Auch entfällt der entsprechende Bestückungsaufwand. Trotzdem lassen sich hohe Rastkräfte aufbringen. Konkret ist dabei so vorgegangen, daß die Rastvorspünge einstückig von der einen Stirnseite einer angespritzten Ringwand (rotationssymmetrisches Wandelement) ausgehen, deren andere Stirnseite über eine zur Ringwand querschnittsreduzierte Materialbrücke in der Scheibe wurzelt. Die querschnittsreduzierte Materialbrücke hat bei geeigneter Gestaltung den Vorteil, daß die Rast-Belastungen nicht verformend in die Scheibe fließen, da durch die spezielle Gestaltung die Radkappen-Sichtfläche nicht von der Verformung des Rastelementes beeinflußt wird; auch die erörterten Radialstege können so entfallen, so daß auch auf diese zurückzuführende Schrumpfungsmarken wegfallen. Weiter erweist es sich als vorteilhaft, daß die Materialbrücke in Umfangsrichtung durchlaufend ausgebildet ist. Das hat besonders bei großen Radkappen den Vorteil einer selbst hohen mechanischen Kräften standhaltenden Anbindung der Befestigungsvorrichtung an der Scheibe. Soll in anderen Größenverhältnissen beispielsweise ein noch höherer Elastizitätsgrad bzw. Flexibilitätsgrad erreicht werden, kann auch die dann bevorzugte Maßnahme von Vorteil sein, daß die Materialbrücke in Umfangsrichtung unterbrochen ausgebildet ist. Es verbleiben also beispielsweise teilkreisförmige Brücken in Form von Stegen oder auch stäbchenförmiger Materialabschnitte. Günstig ist es auch, daß die Materialbrücke von der Innenseite der Ringwand ausgeht. Zur weiteren Erhöhung der Federfähigkeit der in der Ringwand wurzelnden Rastvorsprünge wird vorgeschlagen, daß zwischen den Rastvorsprüngen der Rückseite der Scheibe abgewandt konkav öffnende Nischen bestehen. Das führt zu einem kronenartigen bzw. zinnenartigen Befestigungsvorrichtungs-Körper. Weiter erweist es sich als günstig, daß die Ringwand in von der Scheibe abgewandter Richtung zur Bildung von Rasthalteflächen rotationssymmetrisch zur Ringnormalen divergiert. Auf diese Weise ergibt unter Einbeziehung der Mantelfläche der Ringwand eine relativ lange Rastfläche. Eine weitere Maßnahme zur Erhöhung der Federfähigkeit besteht noch darin, daß im Übergangsbereich zwischen Ringwand und jedem Rastvorsprung eine Durchbrechung der Rastvorsprungs-Wand liegt. Entsprechende Durchbrechungen fördern zudem die Abkühlung der Laufwärme. Zur erleichterten Herbeiführung der Rastverbindung ist weiter so vorgegangen, daß das freie Ende jedes Rastvorsprunges eine Rast-Auflaufschräge bildet. Weiter ergibt sich eine günstige Ausgestaltung durch Tiefenbegrenzungsanschläge am Befestigungsvorsprung. Durch diese sinnvoll zu intergrierenden Tiefenbegrenzungsanschläge wird ein zu tiefes Einpressen der Radkappe in die Radfelge verhindert. Außerdem ist eine definierte Montage (plus Teilbeanspruchung im montierten Zustand) gewährleistet. In baulicher Hinsicht erweist es sich als vorteilhaft, daß die Tiefenbegrenzungsanschläge von nach auswärts gerichteten Anschlagnasen der Rastvorsprünge gebildet sind. Alternativ erweist es sich als günstig, daß die Anschlagnasen in den Nischen angeordnet sind.

Der Gegenstand der Erfindung ist nachstehend anhand eines zeichnerisch veranschaulichten Ausführungsbeispieles näher erläutert. Es zeigt

Fig. 1 eine erfindungsgemäß gestaltete Kunststoff-Radkappe in Seitenansicht,

Fig. 2 die Draufsicht hierzu,

Fig. 3 die Radkappe in Rückansicht,

Fig. 4 den Schnitt gemäß Linie IV-IV in Fig.

3.

Fig. 5 den Schnitt gemäß Linie V-V in Fig. 3, beide Schnitte wesentlich vergrößert und

Fig. 6 eine der Fig. 3 entsprechende Darstellung, jedoch bei in den Nischen angeordneten Tiefenbegrenzungsanschlägen.

Die die Felgenmulde einer nicht näher dargestellte Autoradfelge oder dergleichen der Sicht entziehende Kunststoff-Radkappe besteht aus einer Scheibe 1, welche sich auf ihrer Rückseite 2 in eine Befestigungsvorrichtung 3 fortsetzt. Letztere ist materialeinheitlich gleich mit angeformt.

Die Sichtseite 4 der Scheibe 1 fällt zur Peripherie schwach ab; der Rand 5 ist gefast oder quergerundet.

Die Befestigungsvorrichtung 3 liegt zentral. Sie formt vier winkelgleich verteilte Rastvorsprünge 6. Letztere gehen von einer konzentrisch zur Längsmittelachse x-x verlaufenden Ringwand 7 aus, und zwar von der der Rückseite 2 der Scheibe 1 abgewandten Stirnseite 7′ der besagten Ringwand 7 (rotatorisches Wandelement). Die Ringwand 7 kann vorteilhaft auch als Kugelwandelement bzw. in einem Rototionsparaboloid ähnlicher Gestaltung ausgeführt sein. was bis zu einem fast punktförmigen Anschluß an die Radkappen-Scheibe 1 führt, mit dem Vorteil, nahezu keine Biegespannungen in die Sichtflächen einzuleiten und damit die Erscheinung dieser Fläche frei von störenden Verformungen zu halten.

Die andere, also der Rückseite 2 zugewandte Stirnseite wurzelt unter Belassung einer deutlich querschnittsreduzierten Materialbrücke 8 in der Scheibe 1.

Die in der Radialen gemessene Dicke y der Materialbrücke ent spricht etwa einem Fünftel bis einem Drittel der in dieser Richtung gemessenen Dicke der Ringwand 7 bzw. der Dicke z der anschließenden Rastvorsprünge 6. Die Höhe H entspricht im wesentlichen der Dicke y. Zur Vermeidung einer Kerbwirkung sind die jeweiligen Übergänge konkav gerundet.

Statt der erläuterten durchlaufenden Materialbrücke 8 kann in bestimmten Fällen auch eine Ausgestaltung dahingehend realisiert sein, daß die Materialbrücke 8 in Umfangsrichtung unterbrochen ausgebildet ist, so daß die Stirnseite 7″ über mehr oder weniger lange Stege bzw. "Punkte" an der Scheibe 1 angebunden ist.

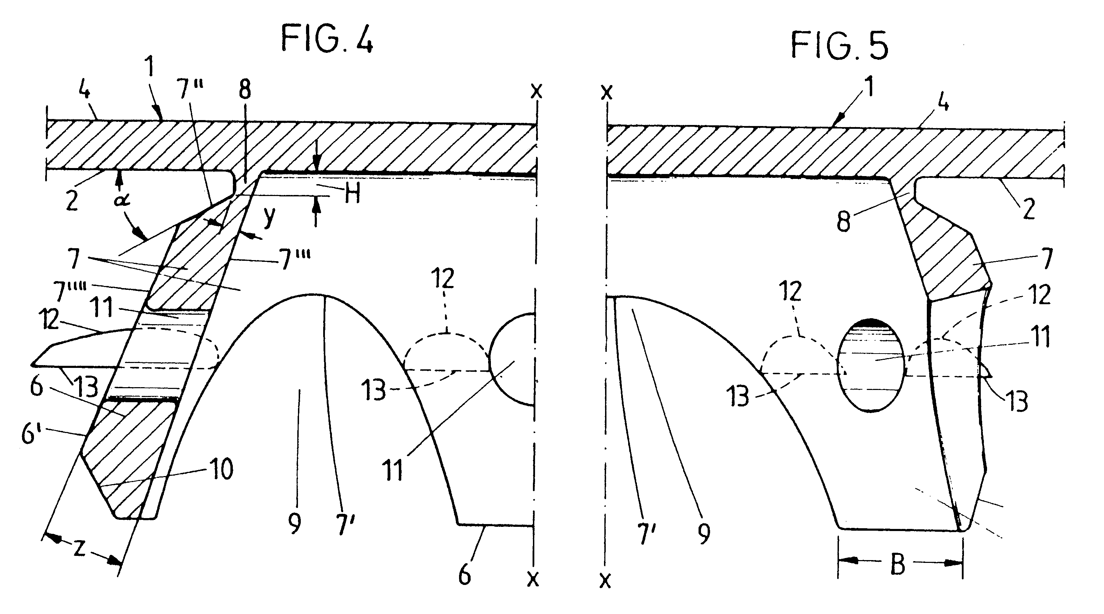

Wie aus den Fig. 4 und 5 besonders deutlich hervorgeht, liegt die Materialbrücke 8 im Bereich der Innenseite 7″ der Ringwand 7. Die Innenseite 7″ fluchtet ebenengleich mit der entsprechenden Innenseite der Materialbrücke 8. Auch die Ringwand 7 selbst nimmt in Richtung der Scheibe 1 an Wandstärke ab.

Die zur querschnittsreduzierten Materialbrücke 8 führende, ringförmige Aussparung ist keilförmig.

Ihr Winkel Alpha liegt bei ca. 30°. Der Winkelscheitel ist gebrochen.

Zwischen den einzelnen Rastvorsprüngen 6 erstrecken sich von der Rückseite 2 der Scheibe 1 abgewandt, konkav öffnende Nischen 9. Der Nischengrund definiert die erwähnte Stirnseite 7′ der Ringwand 7. Die nischenbildende Kontur geht zu den freien Enden der Rastvorsprünge 6 jeweils in einen flacheren Kurvenverlauf über und ist einem Kegelabschnitt vergleichbar. Die öffnungsseitige maximale Breite der Nischen 9 ist größer als die in Umfangsrichtung gemessene Kopfbreite B der Rastvorsprünge 6. Das Verhältnis liegt bei etwa 3:1.

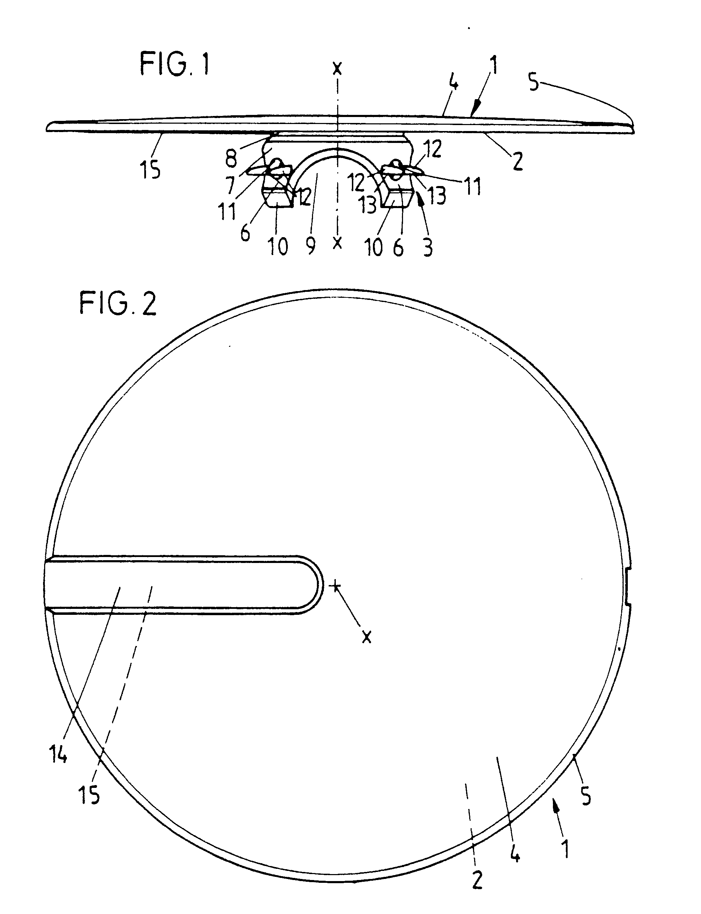

Die Rastvorsprünge 6 sind schräggestellt derart. daß ihr Fuß eine größere Nähe einnimmt zur Längsmittelachse x-x der Befestigungsvorrichtung 3 als ihr freies Kopfende. Bei einer Ausbildung der Befestigungsvorrichtung 3 in Form einer Kugel läge dagegen eine Wölbung der Außenseite 6′ vor. Die Kugel wäre als Hohlkugel auszubilden, die zur scheibenabgewandten Seite hin offen ist und eine der Fig. 1 ähnliche Zackenstruktur aufweisen würde. Entsprechendes gilt für eine paraboloidähnliche Gestalt.

Der entsprechende Ausstellwinkel liegt etwa bei 18° zur Ringwandnormalen, welche der Längsmittelachse x-x gleichzusetzen ist.

Die Außenseite 6′ der einzelnen Rastvorsprünge 6 im Verein mit der ebenengleich ansetzenden Außenseite 7″″ der Ringwand 7 bilden eine entsprechend schräggestellte Rastfläche rotationssymmetrischen Verlaufs für das nicht näher dargestellte Gegenrastmittel.

Zur erleichterten Herbeiführung der Raststellung bildet das freie Ende jedes Rastvorsprunges 6 eine Rast-Auflaufschräge 10 aus. Der Schrägungswinkel liegt bei ca. 45°.

Zur Erhöhung der Flexibilität der eigentlichen Rastvorsprünge 6 ist im Übergangsbereich zwischen Ringwand 7 und jedem Rastvorsprung 6 eine Durchbrechung 11 belassen. Diese in der Rastvorsprungs-Wand liegende Durchbrechung 11 ist radial gerichtet und kreisrunden Durchmessers, also einer Bohrung vergleichbar. Neben der Erhöhung der Flexibilität ergibt sich im Verein mit den zwischen den einzelnen Rastvorsprüngen 6 belassenen Nischen 9 ein guter Belüftungsweg, wenn bezüglich der Durchbrechungen 11 die Fläche nicht durch Gegenrastmittel abgedeckt ist.

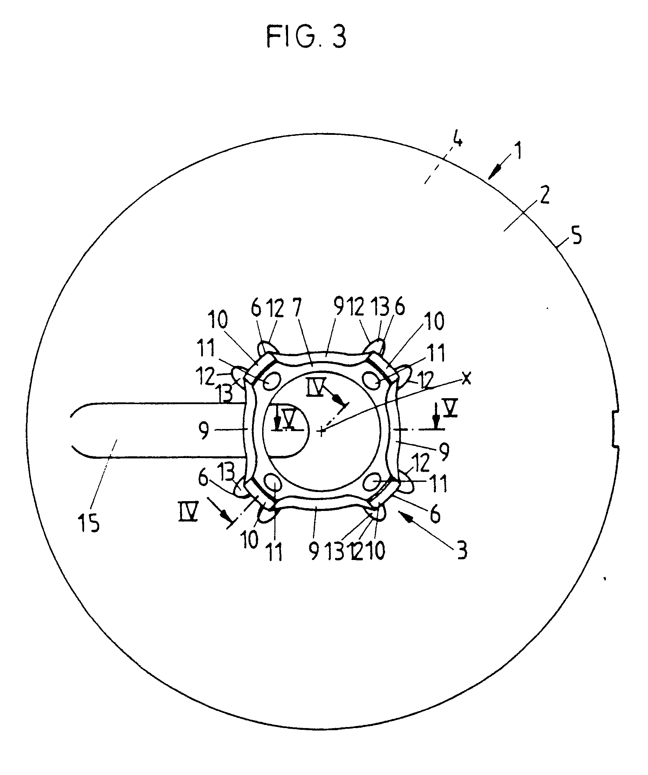

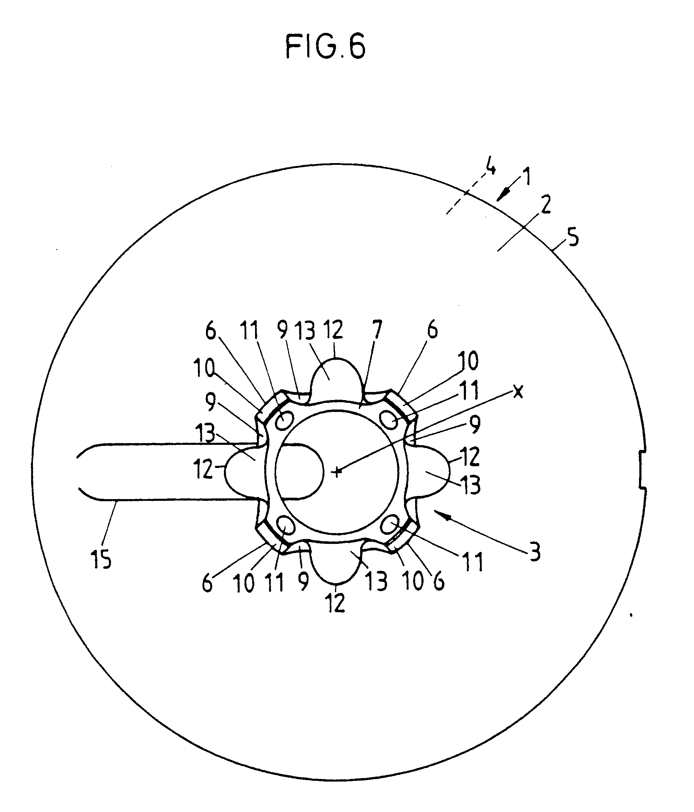

Die auf der Sichtseite 4 (vgl. z.B. Fig. 2) erkennbare radialgerichtete, etwa bis zum Zentrum reichende Depression 14 kann eine erhabene Schriftzüge aufweisende Anformung besitzen, beispielsweise ein Herkunftsangabe. Die zur Rückseite durchragende Kontur ergibt sich aus den Fig. 3 und 6. Sie ist von geringerer Höhe, wie dies auch Fig. 1 auf der linken Seite zeigt. Die Kontur trägt das Bezugszeichen 15 und reicht bis in den Topfraum der Befestigungsvorrichtung 3.

Dem Befestigungsvorsprung 3 beider Ausführungsbeispiele sind Tiefenbegrenzungsanschläge 12 angeordnet. Sinn und Zweck dieser Tiefenbegrenzungsanschläge ist es, ein zu tiefes Einpressen der Radkappe in die Radfelge zu verhindern. Außerdem ergibt sich eine definierte Montage.

Gebildet sind die Tiefenbegrenzungsanschläge 12 von Anschlagnasen 13. Diese gehen beim ersten Ausführungsbeispiel (Fig. 1 - 5) von der Außenseite 6' der Rastvorsprünge 6 aus. Sie überragen diese in radialer Richtung um ein deutliches Maß. Ihre Mitanformung ist dort so, daß jeweils beiderseits der Durchbrechungen 11 je ein Lappen liegt (vgl. Fig. 3). Diese Lappen erstrecken sich parallel zur Ebene der Scheibe 1.

Beim zweiten Ausführungsbeispiel (Fig. 6) sind die Tiefenbegrenzungsanschläge 12 von Anschlagnasen 13 gebildet, die sich in den Nischen 9 erstrecken. d. h. als Anformungen vom Nischengrund 7' ausgehen. dort ebenfalls in radialer auswärtsgerichteter Erstreckung und mit dem erforderlichen Überstandsmaß, wie die Anschlagnasen 13 über die Außenseite 6' der einzelnen Rastvorsprünge 6 hinausragen.

Die in der vorstehenden Beschreibung, Zeichnung und den Ansprüchen offenbarten Merkmale der Erfindung können sowohl einzeln als auch in beliebiger Kombination für die Verwirklichung der Erfindung von Bedeutung sein.

**Ansprüche**

1. In Spritztechnik hergestellte Kunststoff-Radkappe mit einer Scheibe (1) zur Abdeckung der Felgenmulde einer Autofelge oder dergleichen, und mit einer zentral auf der Rückseite (2) der Scheibe (1) angeordneten, radial ausfederbare Rastvorsprünge (6) aufweisenden Befestigungsvorrichtung (3), dadurch gekennzeichnet, daß die Rastvorspünge (6) von der einen Stirnseite (7') einer angespritzen Ringwand (7) ausgehen, deren andere Stirnseite (7'') über eine zur Ringwand (7) (rotatiossymmetrisches Wandelement) querschnittsreduzierte Materialbrücke (8) in der Scheibe (1) wurzelt.

2. Kunststoff-Radkappe, insbesondere nach Anspruch 1, dadurch gekennzeichnet, daß die Materialbrücke (8) in Umfangsrichtung durchlaufend ausgebildet ist.

3. Kunststoff-Radkappe, insbesondere nach einem oder mehreren der vorhergehenden Ansprüche, dadurch gekennzeichnet, daß die Materialbrücke (8) in Umfangsrichtung unterbrochen ausgebildet ist.

4. Kunststoff-Radkappe, insbesondere nach einem oder mehreren der vorhergehenden Ansprüche, dadurch gekennzeichnet, daß die Materialbrücke (8) von der Innenseite (7'') der Ringwand (7) ausgeht.

5. Kunststoff-Radkappe, insbesondere nach einem oder mehreren der vorhergehenden Ansprüche, dadurch gekennzeichnet, daß zwischen den Rastvorsprüngen (6) der Rückseite (2) der Scheibe (1) abgewandt konkav öffnende Nischen (9) bestehen.

6. Kunststoff-Radkappe, insbesondere nach einem oder mehreren der vorhergehenden Ansprüche, dadurch gekennzeichnet, daß die Ringwand (7) in von der Scheibe (1) abgewandter Richtung zur Bildung von Rasthalteflächen rotationssymmetrisch zur Ringnormalen (Längsmittelachse x-x) divergiert.

7. Kunststoff-Radkappe, insbesondere nach einem oder mehreren der vorhergehenden Ansprüche. dadurch gekennzeichnet, daß im Übergangsbereich zwischen Ringwand (7) und jedem Rastvorsprung (6) eine Durchbrechung (11) der Rastvorsprungs-Wand liegt.

8. Kunststoff-Radkappe, insbesondere nach einem oder mehreren der vorhergehenden Ansprüche, dadurch gekennzeichnet, daß das freie Ende jedes Rastvorsprunges (6) eine Rast-Auflaufschräge (10) bildet.

9. Kunststoff-Radkappe, insbesondere nach einem oder mehreren der vorhergehenden Ansprüche, gekennzeichnet durch Tiefenbegrenzungsanschläge (12) am Befestigungsvorsprung (3).

10. Kunststoff-Radkappe, insbesondere nach einem oder mehreren der vorhergehenden Ansprüche, dadurch gekennzeichnet, daß die Tiefenbegrenzungsanschläge (12) von nach auswärts gerichteten Anschlagnasen (13) der Rastvorsprünge (6) gebildet sind.

11. Kunststoff-Radkappe, insbesondere nach einem oder mehreren der vorhergehenden Ansprüche, dadurch gekennzeichnet, daß die Anschlagnasen (13) in den Nischen (9) angeordnet sind.

FIG.1

FIG.2

# FIG. 3

# FIG. 4

# FIG. 5

EP 0 384 459 A1

# FIG.6

# EUROPÄISCHER RECHERCHENBERICHT

Nummer der Anmeldung

EP 90 10 3448

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | AU-B-63273/86 (SPEEDY WHEELS) <br> * Seite 4, Zeile 27 - Seite 5, Zeile 6 * <br> * Seite 5, Zeilen 21 - 23; Figur 2 * | 1, 3 | B60B7/08 <br> B60B7/02 |
| X | PATENT ABSTRACTS OF JAPAN <br> vol. 13, no. 183 (M-820)(3531) 28 April 1989, <br> & JP-A-01 12902 (KANTO SEIKI) 17 Januar 1989, <br> * das ganze Dokument * | 1 | |
| A | FR-A-2515116 (FIAT) <br> * Seite 2, Zeilen 10 - 20; Figuren 1, 2 * | 1 | |
| A | US-A-3353872 (BARTZ) <br> * Spalte 2, Zeilen 29 - 43 * <br> * Spalte 3, Zeilen 32 - 45; Figuren 2, 7 * | 1 | |

RECHERCHIERTE SACHGEBIETE (Int. Cl.5)

B60B

Der vorliegende Recherchenbericht wurde für alle Patentansprüche erstellt

| Recherchenort | Abschlußdatum der Recherche | Prüfer |
|---|---|---|
| DEN HAAG | 29 MAI 1990 | AYTTER I. |